# EUROPEAN PATENT SPECIFICATION

(11) **EP 3 929 004 B1**
(45) Date of publication and mention of the grant of the patent: **01.01.2025**
(21) Application number: 19915635.7
(22) Date of filing: 15.11.2019
(51) Int. Cl.: B60C 11/03, B60C 11/11, B60C 11/13

(54) **MOTORCYCLE TIRE**
MOTORRADREIFEN
PNEU DE MOTOCYCLETTE

(30) Priority: 18.02.2019 JP 2019026921
(43) Date of publication of application: 29.12.2021
(73) Proprietor: BRIDGESTONE CORPORATION, Chuo-ku Tokyo 104-8340 (JP)
(72) Inventor: WAKABAYASHI, Tomoyuki, Tokyo 104-8340 (JP)
(74) Representative: Marks & Clerk LLP
(86) International application number: PCT/JP2019/044829
(87) International publication number: WO 2020/170519

(56) References cited:
- EP-A1- 3 323 636
- EP-B1- 1 106 392
- WO-A1-2010/070921
- ES-T3- 2 374 914
- JP-A- 2007 161 192
- JP-A- 2011 073 656
- JP-A- 2013 139 174
- JP-A- 2013 147 231
- JP-A- 2015 217 723
- JP-A- 2017 065 436
- JP-A- 2018 154 241
- US-A- 3 001 568
- US-A- 5 259 429

## Description

### TECHNICAL FIELD

The present invention relates to a tire for a two-wheeled vehicle (hereinafter, also simply referred to as "tire"). More particularly, the present invention relates to a tire for a two-wheeled vehicle, particularly, a tire for a motorcycle, which involves an improvement in a tread pattern.

### BACKGROUND ART

In general, tires for two-wheeled vehicles for traveling on rough terrain, intended for traveling on rough terrain such as sand, mud, and soft-dirt road surfaces, employ block patterns in which a plurality of blocks are arranged in their tread portions.

For example, Patent Document 5 discloses, as a related art relating to a tire for a two-wheeled vehicle for traveling on rough terrain, a tire for a motorcycle for traveling on rough terrain. This tire for a motorcycle includes a tread portion in which: crown blocks arranged on the tire equator at intervals in the tire circumferential direction; shoulder blocks arranged on the sides closest to tread edges at intervals in the tire circumferential direction; and middle blocks arranged in regions between the crown blocks and the shoulder blocks at intervals in the tire circumferential direction; are provided, for the purpose of enhancing dirt-discharging performance in the vicinity of shoulder portions and improving grip strength and steering stability during cornering. Further, groove bottom protrusions are provided at shoulder groove bottom regions, which are groove bottom regions located on the outer sides in the tire axial direction from tire circumferential lines extending through the outer edges in the tire axial direction of the middle blocks. These groove bottom protrusions extend outward in the tire radial direction, and each has a height from the groove bottom surface to the outer end in the tire radial direction of from 1 to 8 mm, and the maximum cross-sectional size at the groove bottom surface of from 0.5 to 5 mm. In this tire, the proportion of the total sum L of the ground contact areas of the blocks with respect to the total sum S of the areas of the groove bottom surfaces and the ratio of the total area Sb of the shoulder groove bottom regions and the total sum Sp of the cross-sectional areas of the groove bottom protrusions at the groove bottom surfaces are controlled to specific values.

### RELATED ART DOCUMENT

### PATENT DOCUMENT

Patent Document 1: ES 2 374 914 T3
Patent Document 2: US 3 001 568 A
Patent Document 3: EP 3 323 636 A1
Patent Document 4: EP 1 106 392 B1
Patent Document 5: JP 2013 147231 A

ES 2 374 914 T3 discloses an off-road motorcycle tire aimed at improving a traction characteristic and an anti-slip characteristic for cornering, without deteriorating the mud expulsion characteristics especially on a dirt road.

US 3 001 568 A discloses a tire in which the tread surface has a pattern comprising upwardly protruding lower and higher elevations separated from one another by narrow groove-like spaces. The main feature of the tread pattern according to the invention is that it comprises regularly alternating lower and higher elevations.

EP 3 323 636 A1 discloses a motorcycle pneumatic tire aimed at achieving both the traction performance and the cornering gripping performance by comprising a plurality of wide and narrow blocks on the tread surface.

EP 1 106 392 B1 discloses a pneumatic tire and a tire mould, in which the size of the green tire can be increased while preventing the rubber pinch and thus the appearance of the tire and tire uniformity can be improved.

### SUMMARY OF THE INVENTION

### PROBLEMS TO BE SOLVED BY THE INVENTION

Because of the characteristics of the environments in which tires for two-wheeled vehicles for traveling on rough terrain are used, a large amount of dirt, particularly mud, adheres to the tires. In particular, a very large amount of mud adheres to the groove bottom surfaces of the tires, depending on the characteristics thereof. Tires designed for soft road surfaces, which are frequently used, in particular, demonstrate a good performance mainly on soft road surfaces, and on a wide range of road surfaces ranging from sand/mud road surfaces to medium road surfaces. However, the adhesion of mud to the groove bottom surfaces is often observed, when traveled on soft road surfaces and sand/mud road surfaces, containing a larger amount of moisture.

In particular, the adhesion of mud to the groove bottom surfaces in the center portion of the tread causes a deterioration in traction performance and braking performance. Accordingly, there has been a need for a tire that allows for maintaining the traction performance and the braking performance at a high level, by achieving a reduction in the adhesion of mud to the groove bottom surfaces.

While there are techniques such as one disclosed in Patent Document 5, the technique disclosed in Patent Document 5 is intended to enhance the dirt-discharging performance in the vicinity of the shoulder portions of the tread, and is not capable of solving the problem of the adhesion of mud to the center portion. In addition, since the above technique achieves discharging of dirt by means of the restoring force generated when the groove bottom protrusions are bent, it was insufficient from the viewpoint of the durability of the groove bottom protrusions.

Accordingly, an object of the present invention is to solve the problems described above and to provide a tire for a two-wheeled vehicle which allows for maintaining traction performance and braking performance at a high level by reducing the adhesion of mud to groove bottom surfaces in a center portion of a tread.

### MEANS FOR SOLVING THE PROBLEMS

As a result of intensive studies, the present inventors have found out that the above mentioned problems can be solved by providing a plurality of protrusions satisfying predetermined requirements on the groove bottom surfaces in the tread center portion, thereby completing the present invention.

Specifically, the tire for a two-wheeled vehicle according to the present invention is a tire for a two-wheeled vehicle including a tread portion formed in an annular shape,
wherein:
a plurality of blocks are formed on the tread portion;
when the tread portion is divided in the tire width direction into three portions of a tread center portion including the tire equator and a pair of tread shoulder portions including tread edges, a plurality of protrusions are provided on groove bottom surfaces in the tread center portion; and
an aspect ratio H/D of each of the protrusions defined by a maximum width D of a plane at which the protrusion contacts the groove bottom surface and a height H of the protrusion relative to the groove bottom surface is 0.2 or more and 1.0 or less,
wherein each of the protrusions has a shape of a spherical segment lacking a part of a sphere.

In the tire according to the present invention, a radius R of each of the protrusions in the form of a spherical segment preferably is 0.1 mm or more and 10.0 mm or less.

In the tire according to the present invention, protruding shapes can further be formed, on the surface of each of the protrusions in the form of a spherical segment. Still further, in the tire according to the present invention, a percentage of a total area of regions on which the protrusions are formed with respect to an area of the groove bottom surfaces provided with the protrusions is preferably 10% or more.

### EFFECTS OF THE INVENTION

By employing the constitution described above, and thereby reducing the adhesion of mud to the groove bottom surfaces in the center portion of the tread, the present invention enabled to provide a tire for a two-wheeled vehicle which allows for maintaining the traction performance and the braking performance at a high level.

### BRIEF DESCRIPTION OF THE DRAWINGS

FIG. 1 is a partial perspective view showing one example of a tire for a two-wheeled vehicle according to the present invention.
FIG. 2 is a cross-sectional view of the tire for a two-wheeled vehicle shown in FIG. 1, taken along the line X-X.
FIG. 3 is an enlarged cross-sectional view showing one example of a protrusion according to the present invention.
FIG. 4 is an explanatory diagram showing one example of an arrangement form of protrusions in the present invention.
FIG. 5 is an enlarged cross-sectional view showing another example of a protrusion according to the present invention.

### MODE FOR CARRYING OUT THE INVENTION

Embodiments of the present invention will now be described in detail, with reference to drawings.

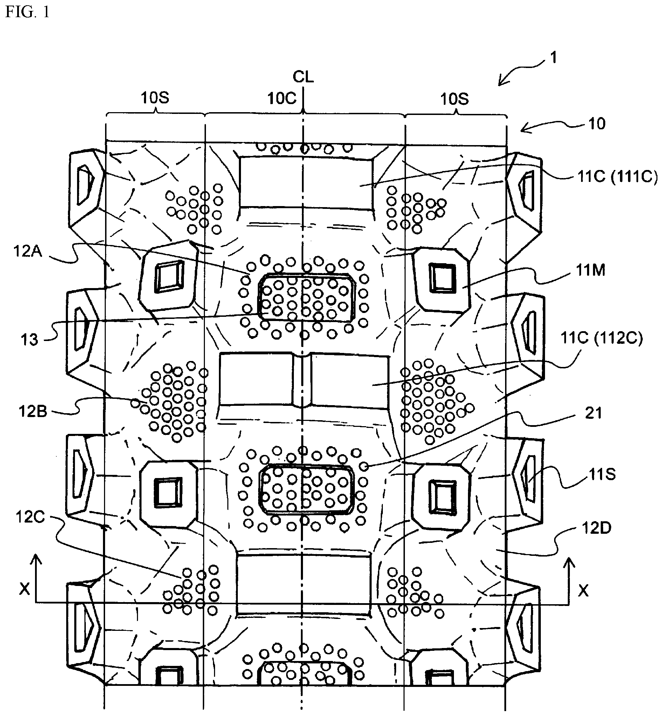

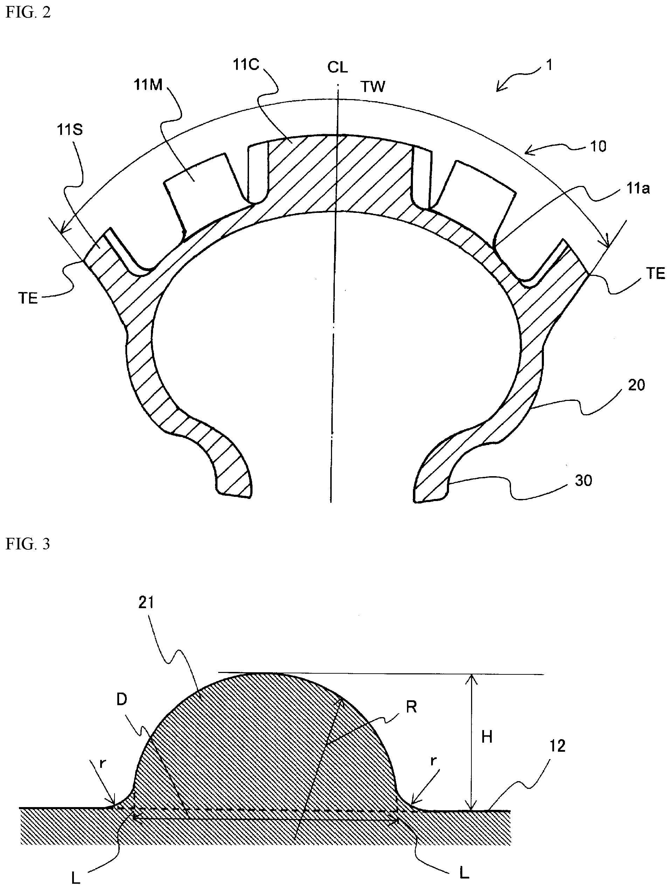

FIG. 1 shows a partial perspective view of one example of the tire for a two-wheeled vehicle according to the present invention. Further, FIG. 2 shows a cross-sectional view of the tire for a two-wheeled vehicle shown in FIG. 1, taken along the line X-X.

As shown in the figures, a tire 1 for a two-wheeled vehicle according to the present invention includes a tread portion 10 formed in an annular shape, and a tread pattern including a plurality of blocks is formed in the tread portion 10. The tread pattern shown in the figures is a line-symmetrical pattern taking a tire equator CL as the axis. In this tire, the direction of rotation is not specified.

In the tire shown in the figures, the plurality of blocks in the tread portion 10 include: center blocks 11C arranged on the tire equator CL in the tread portion; middle blocks 11M arranged on the outer sides in the tire width direction of the center blocks 11C; and shoulder blocks 11S arranged on the outer sides in the tire width direction of the middle blocks 11M.

In the tire for a two-wheeled vehicle according to the present invention, when the tread portion 10 is divided in the tire width direction into three portions including: a tread center portion 10C including the tire equator CL; and a pair of tread shoulder portions 10S including tread edges TE; a plurality of protrusions 21 are provided on groove bottom surfaces in the tread center portion 10C. Further, in the present invention, it is important that each of the protrusions 21 has an aspect ratio H/D of 0.2 or more and 1.0 or less.

By providing the protrusions 21 having a predetermined aspect ratio on the groove bottom surfaces in the tread center portion 10C of the tire, the present invention achieved an in increase in contact area, and the contact between the protrusions 21 due to distortion deformation of the tread crown portion. As a result, it has become possible to reduce the adhesion of mud to the groove bottom surfaces, and to maintain the traction performance and the braking performance. In addition, the protrusions 21 according to the present invention are less susceptible to damage and have an excellent durability, as well, due to having an aspect ratio H/D of 1.0 or less.

FIG. 3 shows an enlarged cross-sectional view of one example of a protrusion according to the present invention. In the present invention, the aspect ratio H/D of each protrusion 21 is defined by the maximum width D of a plane at which the protrusion 21 is in contact with the groove bottom surface 12, and the height H of the protrusion 21 relative to the groove bottom surface 12. Too low an aspect ratio of each protrusion 21 results in a failure to provide an adequate effect of preventing the adhesion of mud, whereas too high an aspect ratio results in poor durability of each protrusion 21. In either case, the expected effects of the present invention cannot be obtained. The expression that "the maximum width D of a plane at which the protrusion 21 is in contact with the groove bottom surface 12" as used herein refers, in the case of the protrusion 21 in the form of a spherical segment as shown in FIG. 3 or a protrusion in the form of a cone or a cylinder, to the diameter of a circle at which the protrusion is in contact with the groove bottom surface, and in the case of a protrusion in the form of a polygonal pyramid or a polygonal prism, to the length of the longest line segment, of the line segments passing through the center of the polygon and are in contact with the groove bottom surface. Further, in cases where the portion at which the protrusion 21 is connected to the groove bottom surface 12 is formed into a curved surface, as shown in FIG. 3, the portion formed into a curved surface is not included in the width of the protrusion 21, and the maximum width D can be defined based on the points at which virtual extension lines L on both ends of the contour line of the protrusion 21 intersect with the groove bottom surface 12. The aspect ratio H/D of each protrusion 21 needs to be 0.2 or more and 1.0 or less, and is preferably 0.3 or more and 0.8 or less.

In the present invention, the range of 40% of a tread width TW, taking the tire equator CL as the center, can be defined as the tread center portion 10C, and the range of 30% of the tread width TW from each of both ends of the tread center portion 10C to the tread edge TE on each side can be defined as each tread shoulder portion 10S. In the present invention, it is possible to reduce a decrease in the traction performance or the braking performance due to the adhesion of mud, by providing the protrusions 21 on the groove bottom surfaces in the tread center portion 10C; however, the protrusions 21 may further be provided on the groove bottom surfaces in the tread shoulder portions 10S. In the present invention, the protrusions 21 can be provided, for example, on the groove bottom surfaces in the range of 40% or more of the tread width TW, taking the tire equator CL as the center. Preferably, the protrusions 21 are provided on the groove bottom surfaces in the range of 40% or more and 100% or less of the tread width TW. When the protrusions 21 are provided within the above described range, the expected effects of the present invention can be obtained in a more favorable manner.

The tread width TW as used in the present invention refers to the distance in the tire width direction between both tread edges TE, as measured along the tread surface, when the tire is mounted on an applicable rim, filled to a specified internal pressure, and in an unloaded state. In the present invention, the term "applicable rim" refers to a rim defined by an industrial standard effective in the region where the tire is produced or used. The term "specified internal pressure" refers to an air pressure corresponding to the maximum load capacity in an applicable size described in the industrial standard. Examples of the industrial standard include: JATMA YEAR BOOK of JATMA (The Japan Automobile Tire Manufacturers Association) in Japan; STANDARDS MANUAL of ETRTO (The European Tyre and Rim Technical Organisation) in Europe; and YEAR BOOK of TRA (The Tire and Rim Association, Inc.) in United States.

In the present invention, the groove bottom surfaces to be provided with the protrusions 21 are the regions of the tread portion in which the blocks are not provided, and the groove bottom surfaces preferably do not include inclined portions in the form of a curved surface, connecting the side surfaces of the blocks and the groove bottom surfaces, namely, groove bottom rounded portions 11a. In the example shown in the FIG. 1, the protrusions 21 are provided in the groove bottom surfaces 12A to 12C including the tread center portion 10C and parts of the tread shoulder portions 10S, among the groove bottom surfaces 12A to 12D. Further, in the example shown in the FIG. 1, bunker portions 13 in the form of a recess are formed in the central portions of the groove bottom surfaces 12A located on the tire equator CL. These bunker portions 13 are also included in the groove bottom surfaces in the present invention, and are provided with the protrusions 21.

Each of the protrusions 21 has a shape in the form of a spherical segment lacking a part of a sphere. From the viewpoints of improving the durability of the protrusions 21 and reducing the adhesion of mud, each of the protrusions 21 has a shape of a spherical segment. Particularly from the viewpoint of preventing the concentration of stress while reducing the adhesion of mud, and to further improve the durability, each of the protrusions 21 is in the form of the spherical segment as shown in FIG. 3.

In the case of forming the protrusions 21 each in the form of the spherical segment as shown in FIG. 3, the spherical shape of the spherical segment preferably has a radius R of 0.1 mm or more and 10.0 mm or less, and more preferably 0.5 mm or more and 2.0 mm or less. By forming the protrusions 21, each in the form of a spherical segment having such a spherical shape, the adhesion of mud to the groove bottom surfaces can be reduced more effectively.

Further, each of the protrusions 21 preferably has a height H of 0.1 mm or more and 5.0 mm or less, and more preferably 0.5 mm or more and 2.0 mm or less. Too high a height H of each protrusion 21 may cause the adhesion of mud between the protrusions 21, whereas too low a height H may result in a failure to properly exhibit the function of reducing the adhesion of mud, both of which are not preferred.

Further, as shown in FIG. 3, the portion at which the protrusion 21 in the form of a spherical segment is connected to the groove bottom surface 12 is preferably formed into a curved surface, in the same manner as the blocks. The curved surface of the portion at which the protrusion 21 in the form of a spherical segment is connected to the groove bottom surface 12 preferably has a radius r of 0.05 mm or more and 3 mm or less, and more preferably 0.1 mm or more and 2 mm or less. Too small a radius r may result in an insufficient durability of each protrusion 21, whereas too large a radius r results in a decrease in the substantial size of each protrusion, possibly resulting in a failure to sufficiently reduce the adhesion of mud, both of which are not preferred.

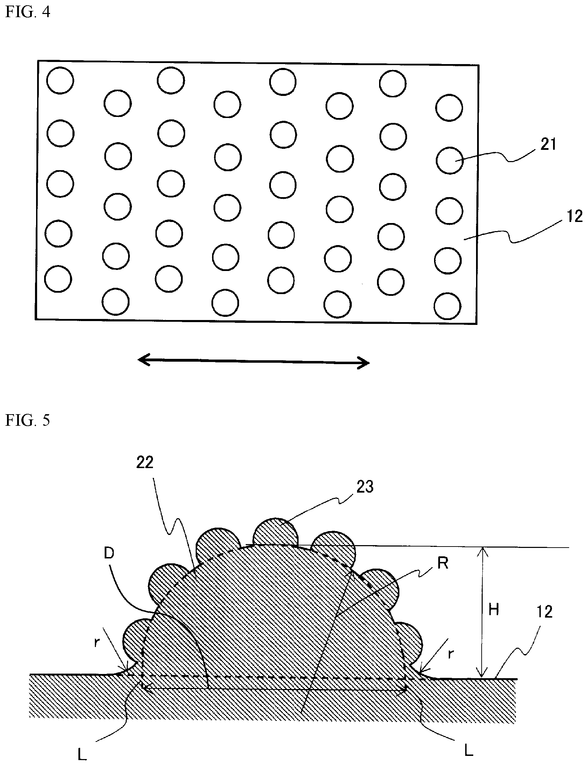

FIG. 4 shows an explanatory diagram illustrating one example of the arrangement form of the protrusions 21 in the present invention. In FIG. 4, the direction of the arrow indicates the tire width direction. In the present invention, a plurality of numbers of the protrusions 21 can be arranged regularly on the groove bottom surface 12, as shown in FIG. 4, or alternatively, a plurality of numbers of the protrusions 21 may be arranged irregularly on the groove bottom surface. For example, in the example shown in FIG. 4, a plurality of the protrusions 21 are arranged regularly at equal intervals.

In the present invention, the number of the protrusions 21 to be arranged is not particularly limited, and can be selected as appropriate and as desired. Specifically, for example, the proportion of the number of the protrusions 21 to be arranged per unit area of the groove bottom surfaces provided with the protrusions 21, is preferably 2 pieces/cm² or more and 20 pieces /cm² or less, more preferably 5 pieces /cm² or more and 10 pieces /cm² or less. The adhesion of mud can be more appropriately reduced, by adjusting the proportion of the protrusions 21 to be arranged within the range described above.

Further, in the present invention, the percentage of the total area of the regions on which the protrusions 21 are formed, with respect to the area of the groove bottom surfaces provided with the protrusions 21, is preferably 10% or more, more preferably 20% or more, and particularly preferably 41% or more, and at the same time, preferably 80% or less, more preferably 75% or less, and particularly preferably 70% or less. The adhesion of mud can be more appropriately reduced, by adjusting the percentage of the protrusions 21 to be arranged within the range described above.

In the present invention, protruding shapes can further be formed, on the surface of each of the protrusions 21 in the form of a spherical segment. FIG. 5 shows an enlarged cross-sectional view illustrating a protrusion in the form of a spherical segment, on the surface of which protruding shapes are formed. As shown in FIG. 5, by further forming protruding shapes 23 on the surface of a protrusion 22, the adhesion of mud can be more effectively reduced. Specifically, as shown in FIG. 5, for example, the protruding shapes 23 each in the form of a spherical segment can further be formed on the surface of the protrusion 22 in the form of a spherical segment. The protruding shapes 23 are preferably formed in such a proportion that the total sum of the volumes of the protruding shapes 23 to be formed is within the range of 1% or more and 10% or less, with respect to 100% of the volume of the protrusion 22. It is noted here that, in the case of the protrusion 22 in the form of a spherical segment, on the surface of which the protruding shapes 23 are formed, as shown in FIG. 5, as well, the height H thereof refers to the height of the protrusion 22 alone excluding that of the protruding shapes 23, and the maximum width D thereof can be defined based on the points at which the virtual extension lines L on both ends of the contour line of the protrusion 22 intersect with the groove bottom surface 12.

In the present invention, the protrusions as described above can be easily formed by providing recesses corresponding to the protrusions on the surface of a vulcanization mold to be used for the production of the tire.

The tire according to the present invention preferably has a positive ratio of 10% or more and 50% or less, and more preferably 20% or more and 30% or less. When the positive ratio is adjusted within the range described above, it is possible to obtain a traction performance and a braking performance appropriate for traveling on a soft-dirt road surface, and thus is preferred. The term "positive ratio" as used herein refers to the percentage of the area of the blocks with respect to the area of the tread portion 10.

In the present invention, the fact that the above described protrusions are provided is important, and this allows for obtaining the expected effects of the present invention. In the present invention, configurations other than that of the protrusions can be selected as appropriate based on prior art, and are not particularly limited.

For example, the center blocks 11C, the middle blocks 11M and the shoulder blocks 11S which are arranged in the tire circumferential direction and in a plurality of numbers, may have shapes and sizes different from one type to another. In the example shown in FIG. 1, the center blocks 11C include blocks 111C each having a substantially rectangular shape, and blocks 112C each having a substantially rectangular shape and having a recess on the tire equator along the tire circumferential direction. Each of the middle blocks 11M has a substantially rectangular shape, and has, in the central portion thereof, a protruding portion having a shape similar to that of the contour line of the block, and a sipe carved along the contour line of the protruding portion. Further, each of the shoulder blocks 11S has a substantially pentagonal shape, and has, in the central portion thereof, a recess having a shape similar to that of the contour line of the block. In the present invention, the tread portion 10 may include other blocks, in addition to the center blocks 11C, the middle blocks 11M and the shoulder blocks 11S.

In the tire according to the present invention, the internal structure of the tire, the arrangement of members, materials to be used and the like may be configured in accordance with conventional methods, and are not particularly limited.

For example, the tire according to the present invention includes at least one carcass ply as a skeleton, and side wall portions 20 and bead portions 30 which are sequentially disposed on both sides in the tire radial direction of the tread portion 10. The carcass ply is formed by arranging textile cords having a relatively high elasticity in parallel with one another. The number of the carcass ply(ies) to be used may be one or two, or three or more. Both end portions of the carcass ply may be folded back at the bead portions from the inner side to the outer side of the tire, around bead cores, and fixed. Alternatively, bead wires may be used to sandwich and fix the respective end portions from both sides. Either of these fixing methods may be used.

In the tire according to the present invention, at least one belt layer can be disposed on the outer side in the tire radial direction of the carcass ply, at its position corresponding to the tread portion. The belt layer may be, for example, a spiral belt composed of a rubber-coated cord(s) wound helically in the tire circumferential direction. Examples of a reinforcing material to be included in the belt layer include a Nylon fiber, an aromatic polyamide (brand name: Kevlar), and steel. Among these, an aromatic polyamide or steel is a reinforcing material which does not elongate even at a high temperature and is capable of reducing the expansion of the tread portion.

Further, in the tire according to the present invention, bead fillers can be disposed on the outer side in the tire radial direction of the bead cores, and an inner liner can be disposed as the innermost layer of the tire.

Still further, in the tire according to the present invention, the tread portion may have a two-layer structure composed of a cap rubber disposed on the tread surface side, and a base rubber disposed on the tread bottom side, in which the cap rubber and the base rubber have hardness different from each other. When the tread rubber has the two-layer structure composed of the cap rubber and the base rubber having different hardness, required properties can be ensured without changing the rigidity of the blocks as a whole, by selecting the combination of the respective rubbers depending on the condition of the road surface, such as, for example, the combination of a hard cap rubber and a soft base rubber, or the combination of a soft cap rubber and a hard base rubber. The hardness of the cap rubber and the base rubber can be adjusted by selecting rubber compositions and fillers thereof, as appropriate, in accordance with a conventional method.

The tire according to the present invention can be suitably used as an off-road tire intended to be used on rough terrain including muddy ground, particularly, as a tire for motocross, or the like.

### EXAMPLES

The present invention will now be described in specific detail, by way of Examples.

### (Example 1)

A rear tire for motocross, such as one shown in FIGs. 1 and 2, in which a plurality of blocks were formed in the tread portion thereof was produced, with a tire size of 120/80-19. In this tire, a plurality of protrusions, each in the form of a spherical segment lacking a part of a sphere, as shown in FIGs. 3 and 4, were arranged, in the groove bottom surfaces within the range of 82% of the tread width TW, taking the tire equator CL as the center. Each protrusion had a height H of 1.2 mm, a maximum width D of 2.4 mm, an aspect ratio H/D of 0.5 and a radius R of 1.2 mm, and the curved surface of the portion thereof connected to the groove bottom surface had a radius r of 0.3 mm. The proportion of the number of the protrusions to be arranged per unit area of the groove bottom surfaces, was 8 pieces/cm², and the percentage of the total area of the regions on which the protrusions are formed, with respect to the total area of the groove bottom surfaces, was 42%.

### (Comparative Example 1)

The same procedure as in Example 1 was repeated except that the protrusions were not provided, to produce the tire of Comparative Example 1.

Each of the thus obtained test tires of Example and Comparative Example was mounted on a vehicle, using as a front tire, a commercially available tire having a tire size of 80/100-21, and comparative traveling tests were carried out under the same road surface conditions and traveling conditions. Specifically, five laps of traveling were performed in 10 minutes on a soft to medium course with 2 km per lap, on which water had been sprinkled, on a sunny day. The mass of each rear tire with a wheel, as a whole, before and after the traveling was measured at an accuracy of 0.1 kg (100 g), and the amount of adhesion of mud associated with the traveling was determined for each test tire. The results are shown in the following Table 1.

**[Table 1]**

| | Comparative Example 1 | Example 1 |
|---|---|---|
| Before Traveling | 12.0 kg | 12.0 kg |
| After Traveling | 12.1 kg | 12.0 kg |
| Difference (mud adhesion) | 0.1 kg | 0.0 kg |

As shown in Table 1 above, about 100 g of mud adhesion was confirmed, in the tire of Comparative Example 1 in which the protrusions are not provided in the groove bottom surfaces. In contrast, in the tire of Example 1 in which the protrusions are provided in the groove bottom surfaces, it was possible to reduce the adhesion of mud to a level almost unmeasurable with a mass measuring device. Further, in the evaluation of appearance by visual observation, as well, less adhesion of mud was confirmed in the tire of Example 1, as compared to the tire of Comparative Example 1.

### DESCRIPTION OF SYMBOLS

- 1: tire for a two-wheeled vehicle
- 10: tread portion
- 10C: tread center portion
- 10S: tread shoulder portion
- 11a: groove bottom rounded portion
- 11C: center block
- 11M: middle block
- 11S: shoulder block
- 12, 12A to 12D: groove bottom surface
- 13: bunker portion
- 20: side wall portion
- 21, 22: protrusion
- 23: protruding shape
- 30: bead portion
- 111C, 112C: block

## Claims

1. A tire (1) for a two-wheeled vehicle, comprising a tread portion (10) formed in an annular shape, wherein:
a plurality of blocks (11C, 11M, 11S) are formed on the tread portion (10);
when the tread portion (10) is divided in the tire width direction into three portions of a tread center portion (10C) including the tire equator (CL) and a pair of tread shoulder portions (10S) including tread edges (TE), a plurality of protrusions (21, 22) are provided on groove bottom surfaces (12) in the tread center portion (10C); and
an aspect ratio H/D of each of the protrusions (21, 22) defined by a maximum width D of a plane at which the protrusion (21, 22) contacts the groove bottom surface (12) and a height H of the protrusion (21, 22) relative to the groove bottom surface (12) is 0.2 or more and 1.0 or less,
wherein each of the protrusions (21, 22) has a shape of a spherical segment lacking a part of a sphere.

2. The tire (1) for a two-wheeled vehicle according to claim 1, wherein a radius R of each of the protrusions (21, 22) in the form of a spherical segment is 0.1 mm or more and 10.0 mm or less.

3. The tire (1) for a two-wheeled vehicle according to claim 1 or 2, wherein protruding shapes (23) are further formed on the surface of each of the protrusions (21, 22) in the form of a spherical segment.

4. The tire (1) for a two-wheeled vehicle according to any one of claims 1 to 3, wherein a percentage of a total area of regions on which the protrusions (21, 22) are formed with respect to an area of the groove bottom surfaces (12) provided with the protrusions is 10% or more.

## Patentansprüche

1. Reifen (1) für ein zweirädriges Fahrzeug, der einen Laufflächenabschnitt (10) umfasst, der in einer Ringform geformt ist, wobei:
eine Vielzahl von Blöcken (11C, 11M, 11S) auf dem Laufflächenabschnitt (10) geformt sind;
wenn der Laufflächenabschnitt (10) in der Reifenbreitenrichtung in drei Abschnitte eines Laufflächen-Mittelabschnitts (10C), der den Reifenäquator (CL) einschließt, und ein Paar von Laufflächen-Schulterabschnitten (10S), die Laufflächenkanten (TE) einschließen, unterteilt ist, eine Vielzahl von Vorsprüngen (21, 22) auf Rillensohlenflächen (12) in dem Laufflächen-Mittelabschnitt (10C) bereitgestellt sind; und
ein Seitenverhältnis H/D jedes der Vorsprünge (21, 22), das durch eine maximale Breite D einer Ebene, bei welcher der Vorsprung (21, 22) die Rillensohlenfläche (12) berührt, und eine Höhe H des Vorsprungs (21, 22) im Verhältnis zu der Rillensohlenfläche (12) definiert wird, 0,2 oder mehr und 1,0 oder weniger beträgt,
wobei jeder der Vorsprünge (21, 22) eine Form eines Kugelsegments, dem ein Teil einer Kugel fehlt, aufweist.

2. Reifen (1) für ein zweirädriges Fahrzeug nach Anspruch 1, wobei ein Radius R jedes der Vorsprünge (21, 22) in der Form eines Kugelsegments 0,1 mm oder mehr und 10,0 mm oder weniger beträgt.

3. Reifen (1) für ein zweirädriges Fahrzeug nach Anspruch 1 oder 2, wobei vorspringende Formen (23) ferner auf der Oberfläche jedes der Vorsprünge (21, 22) in der Form eines Kugelsegments geformt sind.

4. Reifen (1) für ein zweirädriges Fahrzeug nach einem der Ansprüche 1 bis 3, wobei ein Prozentsatz eines Gesamtgebiets von Bereichen, auf denen die Vorsprünge (21, 22) geformt sind, in Bezug auf ein Gebiet der Rillensohlenflächen (12), die mit den Vorsprüngen versehen sind, 10 % oder mehr beträgt.

## Revendications

1. Pneumatique (1) pour un véhicule à deux roues, comprenant une partie de bande de roulement (10) formée en une forme annulaire, dans lequel :
une pluralité de pavés (11C, 11M, 11S) sont formés sur la partie de bande de roulement (10) ;
lorsque la partie de bande de roulement (10) est divisée dans la direction de la largeur du pneumatique en trois parties d'une partie du centre de la bande de roulement (10C), incluant l'équateur du pneumatique (CL) et une paire de parties d'épaulement de la bande de roulement (10S), incluant des bords de la bande de roulement (TE), une pluralité de saillies (21, 22) sont fournies sur des surfaces de fond de rainure (12) dans la partie du centre de la bande de roulement (10C) ; et
un rapport d'aspect H/D de chacune des saillies (21, 22), défini par une largeur maximale D d'un plan au niveau duquel la saillie (21, 22) contacte la surface de fond de rainure (12) et une hauteur H de la saillie (21, 22) par rapport à la surface de fond de rainure (12), est de 0,2 ou plus et de 1,0 ou moins,
dans lequel chacune des saillies (21, 22) a une forme d'un segment sphérique dépourvue d'une partie d'une sphère.

2. Pneumatique (1) pour un véhicule à deux roues selon la revendication 1, dans lequel un rayon R de chacune des saillies (21, 22) sous forme d'un segment sphérique est de 0,1 mm ou plus et de 10,0 mm ou moins.

3. Pneumatique (1) pour un véhicule à deux roues selon la revendication 1 ou la revendication 2, dans lequel des formes en saillie (23) sont en outre formées sur la surface de chacune des saillies (21, 22) sous forme d'un segment sphérique.

4. Pneumatique (1) pour un véhicule à deux roues selon l'une quelconque des revendications 1 à 3, dans lequel un pourcentage d'une aire totale de régions sur lesquelles les saillies (21, 22) sont formées par rapport à une aire des surfaces de fond de rainure (12) dotées des saillies est de 10 % ou plus.
